Europäisches Patentamt

European Patent Office

Office européen des brevets

(11) Publication number : **0 532 292 A1**

## (12) EUROPEAN PATENT APPLICATION

(21) Application number : **92308176.4**

(22) Date of filing : **09.09.92**

(51) Int. Cl.⁵ : **G02F 1/1335**

(30) Priority : **10.09.91 JP 230610/91**

(43) Date of publication of application :
**17.03.93 Bulletin 93/11**

(84) Designated Contracting States :
**DE GB NL**

(71) Applicant : **SHARP KABUSHIKI KAISHA**
**22-22 Nagaike-cho Abeno-ku**
**Osaka 545 (JP)**

(72) Inventor : **Matsushita, Tomohisa**
**Mikasaryo, 492, Minosho-cho**
**Yamatokoriyama-shi, Nara-ken (JP)**

(74) Representative : **White, Martin David**
**MARKS & CLERK 57/60 Lincoln's Inn Fields**
**London WC2A 3LS (GB)**

(54) **Liquid crystal display apparatus.**

㊸7   A stable monochromatic display is realized despite temperature changes. A liquid crystal display apparatus is composed by stacking a polarizer (6), a phase difference plate (4), a supertwisted nematic liquid crystal display element (3), a phase difference plate (5), and a polarizer (7) in this sequence, in which supposing the product of the liquid crystal layer thickness d of the liquid crystal element (3) and the refractive anisotropy $\Delta n$ of the liquid crystal to be $d \cdot \Delta n$, the retardation of the phase difference plates to be R, the angle formed by the liquid crystal molecular orientation axis of a substrate (2a) of the liquid crystal display element and the absorption axis of the polarizer (6) to be $\alpha$, the angle formed by the liquid crystal molecular orientation axis of the substrate (2a) of the liquid crystal display element (3) and the optical axis of the phase difference plate (4) to be $\beta$, the angle formed by the liquid crystal molecular orientation axis of a substrate (2b) of the liquid crystal display element (3) and the absorption axis of the polarizer (7) to be $\gamma$, the angle formed by the liquid crystal molecular orientation axis of the substrate (2b) of the liquid crystal element (3) and the optical axis of the phase difference plate (5) to be $\theta$, and the twisting angle of the liquid crystal molecule of the liquid crystal element (3) to be $\phi$, the following conditions are satisfied : $d \cdot \Delta n = 0.82$ to $0.86\ \mu m$. R = 360 to 400 nm, $\alpha = 40°$ to $50°$, $\beta = 70°$ to $80°$, $\gamma = 40°$ to $50°$, $\theta = 100°$ to $110°$, $\phi = 210°$ to $260°$.

EP 0 532 292 A1

## BACKGROUND OF THE INVENTION

### 1. Field of the Invention

The present invention relates to a liquid crystal display apparatus of supertwisted nematic type provided with phase difference plates as color compensation plates.

### 2. Description of the Related Art

Hitherto, in the supertwisted nematic negative display type liquid crystal display apparatus (hereinafter culled STN-LCD), in order to compensate for the coloring phenomenon caused by double refractive index anisotropy, phase difference plates are used as color compensation plates. In such STN-LCD, the retardation d·Δn of the liquid crystal element is selected, for example, at 0.92 μm, and the retardation R of the phase difference plates is selected, for example, within 400 to 440 nm.

In the negative display type STN-LCD provided with such phase difference plates, the chromaticity change against temperature change is large, and it is likely to be influenced by heat from the backlight used as the light source or the ambient atmosphere, and the display color becomes uneven depending on the environments of using the liquid crystal display apparatus, and uniformity to display against heat is inferior.

## SUMMARY OF THE INVENTION

It is hence a primary object of the invention to present a liquid crystal display apparatus capable of offering a stable monochromatic display against temperature changes.

In order to achieve the above object, the invention presents a liquid crystal display apparatus composed by stacking a first polarizer, a first phase difference plate, a supertwisted nematic liquid crystal element, a second phase difference plate, and a second polarizer in this sequence, wherein

supposing the product of the liquid crystal layer thickness d of the supertwisted nematic liquid crystal element and the refractive anisotropy Δn of the liquid crystal to be d·Δn, the retardation of the first and second phase difference plates to be R, the angle formed by the liquid crystal molecular orientation axis of the first polarizer aide substrate of the liquid crystal element and the absorption axis of the first polarizer to be α, the angle formed by the liquid crystal molecular orientation axis of the first polarizer side substrate of the liquid crystal element and the optical axis of the first phase difference plate to be β, the angle formed by the liquid crystal molecular orientation axis of the second polarizer side substrate of the liquid crystal display element and the absorption axis of the second polarizer to be γ, the angle formed by the liquid crystal molecular orientation axis of the second polarizer side substrate of the liquid crystal element and the optical axis of the second phase difference plate to be θ, and the twisting angle of the liquid crystal molecule of the liquid crystal element to be φ, the following conditions are satisfied:

$$d·Δn = 0.82 \text{ to } 0.86 \text{ μm} \quad (1)$$
$$R = 360 \text{ to } 400 \text{ nm} \quad (2)$$
$$α = 40° \text{ to } 50° \quad (3)$$
$$β = 70° \text{ to } 80° \quad (4)$$
$$γ = 40° \text{ to } 50° \quad (5)$$
$$θ = 100° \text{ to } 110° \quad (6)$$
$$φ = 210° \text{ to } 260° \quad (7)$$

According to the invention, in the liquid crystal display apparatus of supertwisted nematic type provided with phase difference plates, while conventionally the product d·Δn of the liquid crystal layer thickness d of the liquid crystal element and the refractive anisotropy Δn of the liquid crystal was 0.92 μm and the retardation R of the first and second phase difference plates was 400 to 440 nm, d·Δn is set at 0.82 to 0.86 μm, and retardation R is set at 360 to 400 nm. Besides, the angle α formed by the liquid crystal molecular orientation axis of the first polarizer side substrate of the liquid crystal element and the absorption axis of the first polarizer is selected at 40° to 50°, the angle β formed by the liquid crystal molecular orientation axis of the first polarizer side substrate of the liquid crystal element and the optical axis of the first phase difference plate is selected at 70° to 80°, the angle γ formed by the liquid crystal molecular orientation axis of the second polarizer side substrate of the liquid crystal element and the absorption axis of the second polarizer is selected at 40° to 50°, the angle θ formed by the liquid crystal molecular orientation axis of the second polarizer side substrate of the liquid crystal element and the optical axis of the second phase difference plate is selected at 100° to 110°, and the twisting angle φ of the liquid crystal molecule of the liquid crystal element is selected at 210° to 260°. By disposing the constituent members in such condition setting, the chromaticity change against temperature change become smaller as proved experimentally by the present inventor.

It is also experimentally confirmed by the present inventor that the contrast is extremely worsened when d·Δn is smaller than 0.82 μm and the retardation R is smaller than 360 nm.

Thus according to the invention, in the liquid crystal display apparatus of supertwisted nematic type provided with phase difference plates, a stable monochromatic display is realized with a smaller chromaticity change against temperature change as compared with the conventional liquid crystal display apparatus.

It is also a feature of the invention to set in the conditions of d·Δn = 0.86 μm. R = 390 nm. $\alpha$ = 45° , $\beta$ = 75° , $\gamma$ = 45° , $\theta$ = 105° , $\phi$ = 240° .

It is another feature of the invention to set in the conditions of d·Δn = 0.84 μm, R = 380 nm, $\alpha$ = 45° , $\beta$ = 75° , $\gamma$ = 45° , $\theta$ = 105° , $\phi$ = 240°.

## BRIEF DESCRIPTION OF THE DRAWINGS

Other and further objects, features, and advantages of the invention will be more explicit from the following detailed description taken with reference to the drawings wherein:

Fig. 1 is a sectional view showing the structure of a liquid crystal display apparatus 1 in an embodiment of the invention.

Fig. 2 is a diagram for explaining the configuration conditions of constituent members in the liquid crystal display apparatus 1.

Fig. 3 is a diagram showing the chromaticity changes against temperature changes in the liquid crystal display apparatus 1 and in the prior art.

Fig. 4 is a diagram showing the chromaticity changes against temperature changes in the liquid crystal display apparatus 1 and in the prior art.

Fig. 5 is a diagram showing the chromaticity changes against temperature changes in the liquid crystal display apparatus 1 and in the prior art.

Fig. 6 is a diagram showing voltage waveforms applied to the liquid crystal display apparatus 1 and to the prior art.

Fig. 7 is a diagram showing luminance spectrum of the backlight used in the liquid crystal display apparatus 1.

Fig. 8 is a diagram showing the chromaticity changes against driving voltage changes of the selective waveform applied parts in the liquid crystal display apparatus 1 and in the prior art.

Fig. 9 is a diagram showing the chromaticity changes against temperature changes in the second embodiment of the invention and in the prior art.

Fig. 10 is a diagram showing the chromaticity changes against temperature changes in the second embodiment of the invention and in the prior art.

Fig. 11 is a diagram showing the chromaticity changes against temperature changes in the second embodiment of the invention and in the prior art.

## DETAILED DESCRIPTION OF THE PREFERRED EMBODIMENTS

Now referring to the drawing, preferred embodiments of the invention are described below.

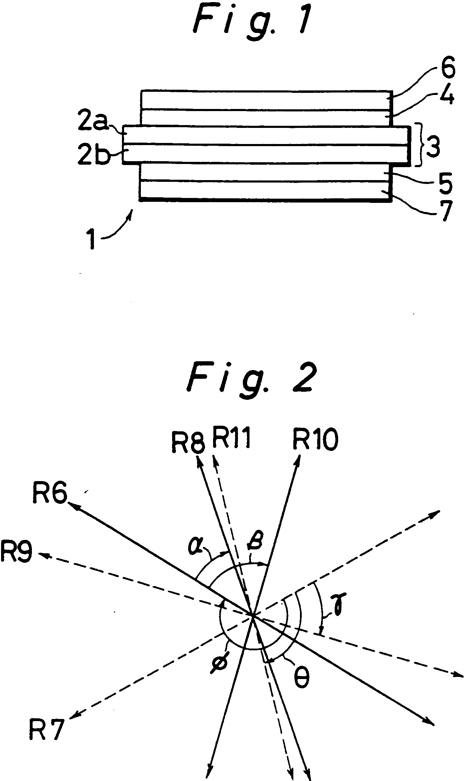

Fig. 1 is a sectional view showing the constitution of a liquid crystal display apparatus 1 in an embodiment of the invention. The liquid crystal display apparatus 1 comprises a supertwisted nematic liquid crystal display element (STN-LCD) 3 composed of first and second substrates 2a, 2b possessing light transmissivity, first and second phase difference plates 4, 5 disposed through the liquid crystal display element 3, and first and second polarizers 6, 7 disposed at the opposite surface of the liquid crystal display element 3 of the first and second phase difference plates 4, 5.

The liquid crystal display element 3 possesses an electrode forming pattern of simple matrix type, and the twisting angle of the liquid crystal molecule is selected at 240° , and the product d·Δn of the liquid crystal layer thickness d and the refractive index anisotropy Δn of the liquid crystal layer is set at 0.86 μm. The liquid crystal to be used is a mixture of about 20 substances, consisting of 73% of phenylcyclohexane system liquid crystal, 13% of cyclohexane system liquid crystal, and 14% of phenylpyrimidine system liquid crystal. The first and second substrates 2a, 2b are made of soda glass, and are 0.7 to 1.1 mm in thickness. As orientation film, polyimide resin was formed in a thickness of 500 Å. Here, the liquid crystal layer thickness is d = 7.5 μm, and the refractive anisotropy Δn = 0.1147 or about 0.115.

The first and second phase difference plates 4, 5 are made of uniaxial high molecular film (polycarbonate), and are 50 μm in thickness, and the retardation value R is 390 nm (as measured by spectroscopic method). The first and second polarizers 6, 7 have the single transmissivity of 42% and the degree of polarization of 99.99%, and are 180 µm in thickness. In this embodiment, the liquid crystal display apparatus 1 of negative display type was composed by stacking the first polarizer 6, first phase difference plate 4, liquid crystal display element 3, second phase difference plate 5, and second polarizer 7 in the configuration condition specified below.

Fig. 2 is a diagram for explaining the configuration of stacking of constituent members of the liquid crystal display apparatus 1. In Fig. 2, arrow R6 denotes the liquid crystal molecular orientation axis of the first substrate 2a for composing the liquid crystal display element 3, and arrow R7 denotes the liquid crystal molecular orientation axis of the second substrate 2b for composing the liquid crystal display element 3. Arrow R8 denotes the absorption axis of the first polarizer 6, and arrow R9 denotes the absorption axis of the second polarizer 7. Arrow R10 denotes the optical axis (drawing direction) of the first phase difference plate 4, and arrow R11 denotes to the optical axis (drawing direction) of the second phase difference plate 5.

Besides, the angle $\alpha$ is an angle formed by the liquid crystal molecular orientation axis R6 of the first substrate 2a and the absorption axis R8 of the first polarizer 6, the angle $\beta$ is an angle formed by the liquid crystal molecular orientation axis R6 of the first substrate 2a and the optical axis R10 of the first phase difference plate 4, the angle $\gamma$ is an angle formed by the liquid crystal molecular orientation axis R7 of the second substrate 2b and the absorption axis R9 of the second polarizer 7, the angle $\theta$ is an angle formed by the liquid crystal molecular orientation axis R7 of the second substrate 2b and the optical axis R11 of the second phase difference plate 5, and the angle $\phi$ is a twisting angle of the liquid crystal molecule. In Fig. 2, meanwhile, the clockwise direction is supposed to be positive.

Table 1 shows the installation conditions of the constituent members in the liquid crystal display apparatus 1, and installation conditions of the constituent members in the prior art as a reference example.

Table 1

|  | Liquid crystal display apparatus 1 | Reference example |
| --- | --- | --- |
|  | (allowable range) | (prior art) |
| d·Δn | 0.86 µm (0.82 to 0.86 µm) | 0.92 µm |
| R | 390 nm (360 to 400 nm) | 400 to 440 nm |
| $\alpha$ | 45° (40° to 50°) | 40° |
| $\beta$ | 75° (70° to 80°) | 75° |
| $\gamma$ | 45° (40° to 50°) | 50° |
| $\theta$ | 105° (100° to 110°) | 110° |
| $\phi$ | 240° (210° to 260°) | 240° |

Below are explained the results of comparison between the liquid crystal display apparatus 1 and the prior art composed in the setting conditions given in Table 1.

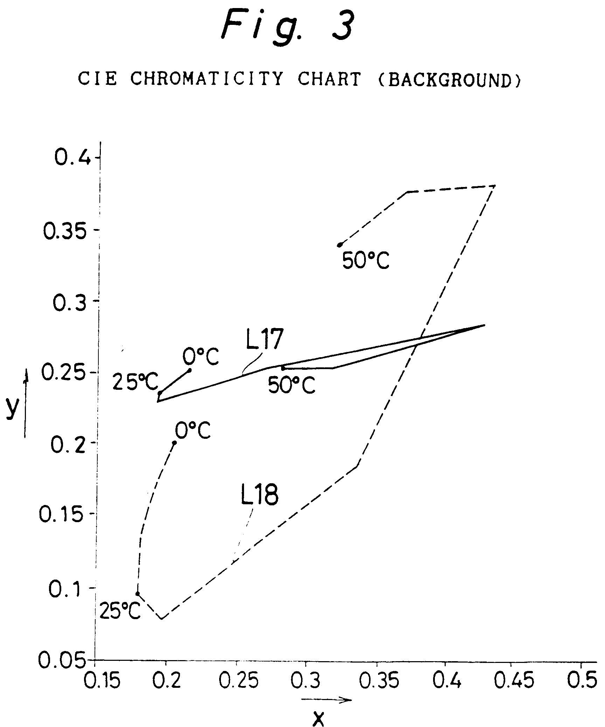

Fig. 3 is a chromaticity diagram showing chromaticity changes against temperature changes (0 to 50°C) without application of voltage. In Fig. 3, solid line L17 denotes the chromaticity changes of the liquid crystal display apparatus 1, and broken line L18 denotes the chromaticity changes in the prior art. As understood from the chromaticity diagram in Fig. 3, the liquid crystal display apparatus 1 of the embodiment is smaller in the chromaticity changes against temperature changes without application of voltage as compared with the prior art.

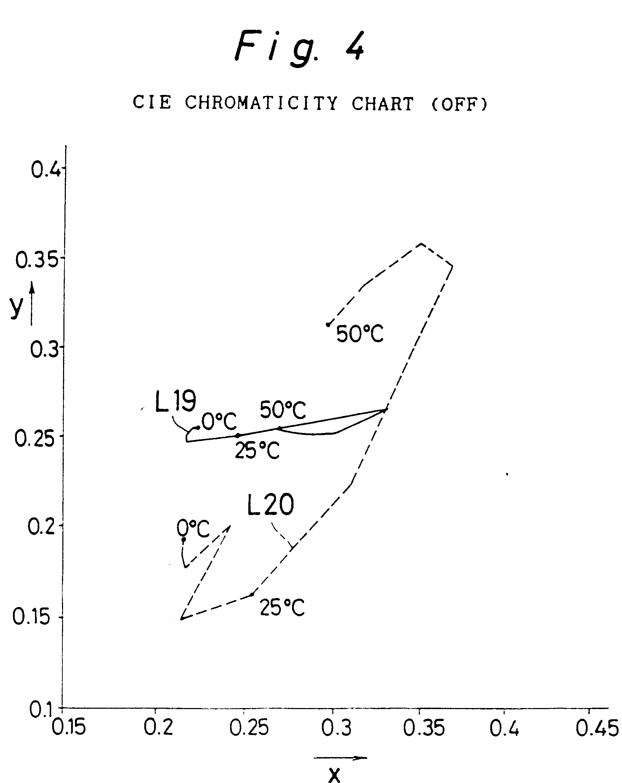

Fig. 4 is a chromaticity diagram showing chromaticity changes against temperature changes (0 to 50°C) when a nonselective waveform is applied. In Fig. 4, solid line L19 denotes the chromaticity changes of the liquid crystal display apparatus 1, and broken line L20 denotes to the chromaticity changes in the prior art. As known from Fig. 4, the liquid crystal display apparatus 1 is smaller in chromaticity changes against temperature changes when nonselective waveform is applied as compared with the prior art.

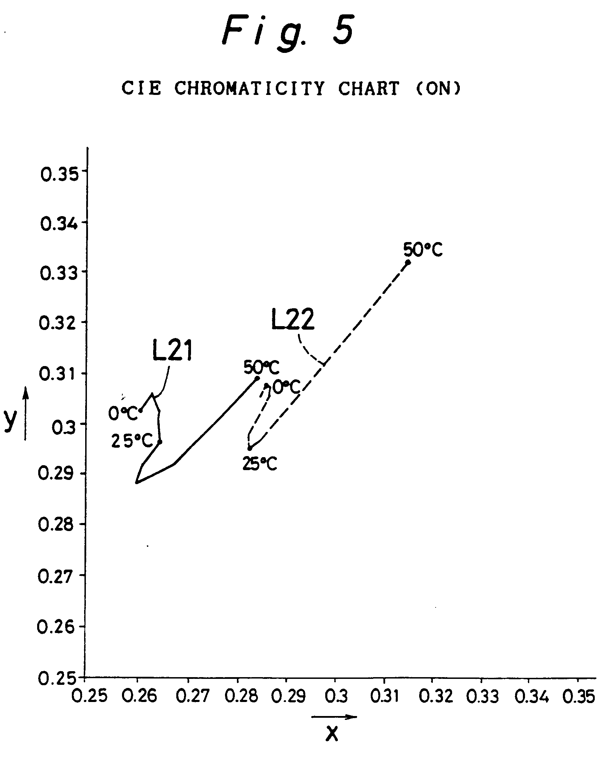

Fig. 5 is a chromaticity diagram showing chromaticity changes against temperature changes (0 to 50°C) when selective a waveform is applied. In Fig. 5, solid line L21 denotes the chromaticity changes of the liquid crystal display apparatus 1, and broken line L22 denotes the chromaticity changes in the prior art. As known from Fig. 5, the liquid crystal display apparatus 1 is smaller in chromaticity changes against temperature changes when selective waveform is applied as compared with the prior art.

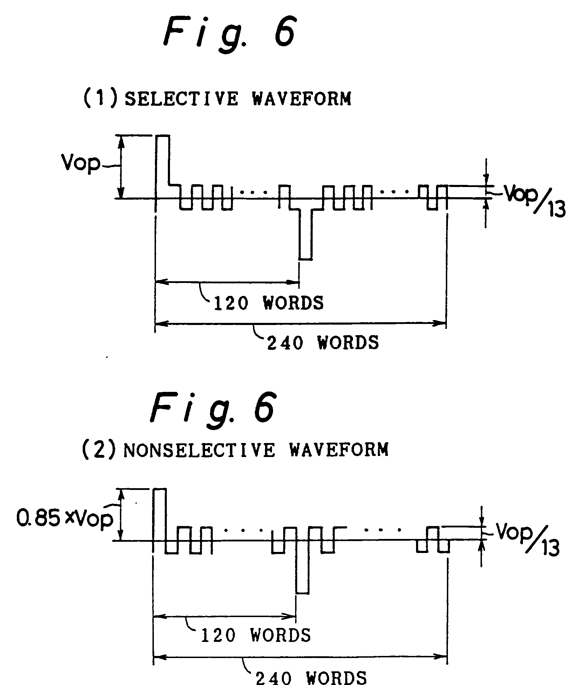

Fig. 6 shows voltage waveform applied to the liquid crystal display apparatus 1 and prior art. In this embodiment, 1/240D (duty), 1/13B (bias) drive was applied. Fig. 6 (1) shows the selective waveform, and Fig. 6 (2), nonselective waveform. The voltage waveform is set here on the basis of the voltage averaging method.

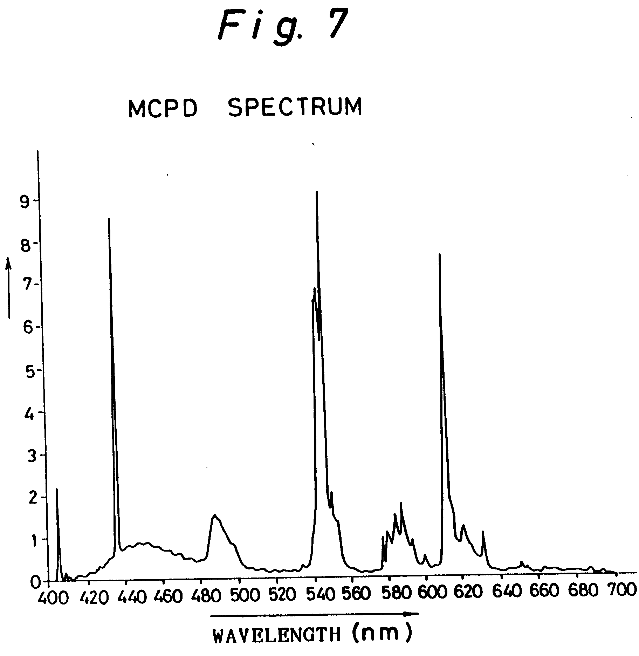

Generally, it is known that a favorable monochromatic gradation is obtained by using, as the backlight (light source) of the liquid crystal display apparatus, a cold cathode tube having a chromaticity of x = 0.33, y = 0.35 on the CIE chromaticity coordinates. A luminance spectrum of the cold cathode tube is shown in Fig. 7.

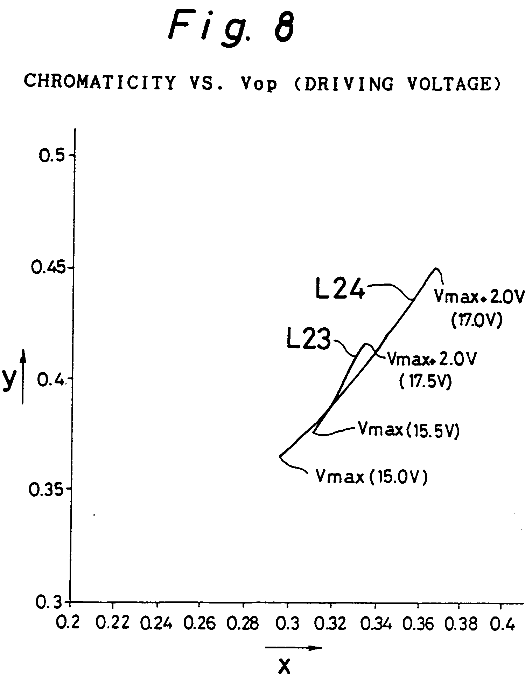

Fig. 8 is a chromaticity diagram showing chromaticity changes against driving voltage changes (Vop to Vop + 2.0V) of the selective waveform applied parts when using the backlight. In Fig. 8, solid line L23 denotes the chromaticity changes in the liquid crystal display apparatus 1, and solid line L24 denotes the chromaticity changes in the prior art. Here, the voltage Vop corresponds to the voltage Vmax when the contrast is at maximum in the liquid crystal display apparatus, and 2.0V means a sufficient voltage width for varying the hue. As understood from Fig. 8, the liquid crystal display apparatus 1 is smaller in chromaticity changes against voltage changes as compared with the prior art.

In succession, the measuring method of retardation of phase difference plate is briefly explained below. First, between a pair of polarizers disposed in a cross Nicol's state in which the absorption axes mutually cross orthogonally, two phase difference plates are overlaid so that the optical axes may coincide with each other, and are disposed at an angle of 45° to the absorption axes of the polarizers.

The spectral transmissivity T in this state of configuration is expressed in formula 8.

$$T = \frac{I}{IO} = (\sin 2\theta)^2 \cdot (\sin \frac{\pi R}{\lambda}) : \quad (8)$$

where I denotes the exit light intensity , IO denotes the incident light intensity, $\theta$ denotes to the angle formed by the optical axis of the phase difference plate and the absorption axis of polarizer, R denotes the retardation value of the two phase difference plates, and $\lambda$ denotes the wavelength of light.

Here, since $\theta = 45°$, the spectral transmissivity T may be expressed in formula 9.

$$T = (\sin \frac{\pi R}{\lambda})^2 \quad (9)$$

Furthermore, when the spectral transmissivity T has the maximum value, it follows that

$$\frac{\pi R}{\lambda} = (n - \frac{1}{2})\pi \quad (10)$$

Therefore, the retardation value R of the two phase difference plates is expressed in formula 11.

$$R = (n - \frac{1}{2})\lambda \quad (11)$$

Moreover, supposing the retardation value of one phase difference plate to be r, the relation of formula 12 is established.

$$R = 2r \quad (12)$$

Hence, the retardation value r of one phase difference plate is expressed in formula 13.

$$r = \frac{1}{2}(n - \frac{1}{2})\lambda \quad (13)$$

Here, if n = 2 (the value of n is determined from the interference color), the retardation value r is expressed in formula 14.

$$r = \frac{3}{4}\lambda \quad (14)$$

where $\lambda$ is the value when the spectral transmissivity T is at maximum.

Thus, according to the embodiment, in the liquid crystal display apparatus 1 of negative display type provided with phase difference plates, a stable monochromatic display is obtained, with smaller chromaticity changes against temperature changes as compared with the prior art.

As a second embodiment of the invention, the liquid crystal display apparatus 1 was composed according to the installation conditions of constituent members as shown in Table 2, which is compared below with the prior art.

Table 2

| | Liquid crystal display apparatus 1 | Reference example |
|---|---|---|
| | | (prior art) |
| d·Δn | 7.5 μm x 0.112 = 0.84 μm | 0.92 μm |
| R | 380 nm | 400 to 440 nm |
| α | 45° | 40° |
| β | 75° | 75° |
| γ | 45° | 50° |
| θ | 105° | 110° |
| φ | 240° | 240° |

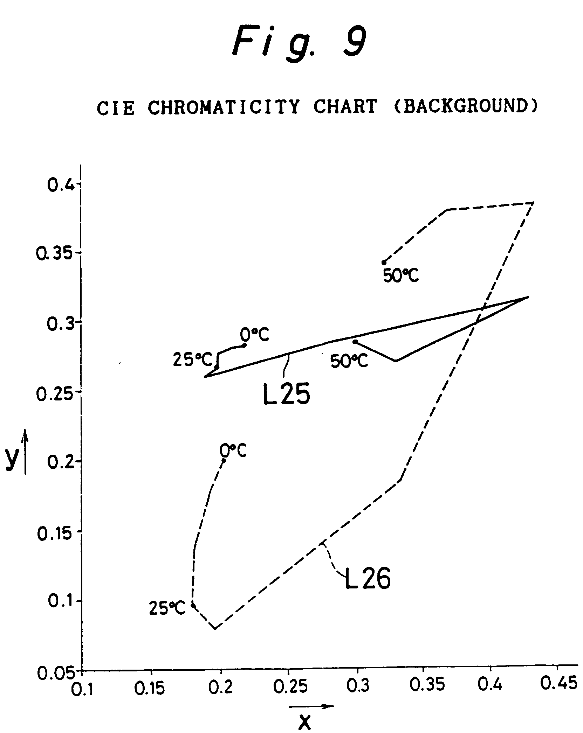

Fig. 9 is a chromaticity diagram showing chromaticity changes against temperature changes (0 to 50°C) without application of voltage. In Fig. 9, solid line L25 denotes the chromaticity changes of the liquid crystal display apparatus 1, and broken line L26 denotes to the chromaticity changes in the prior art. As understood from the chromaticity diagram in Fig. 9, the liquid crystal display apparatus 1 of the invention is smaller in chromaticity changes against temperature changes without application of voltage as compared with the prior art.

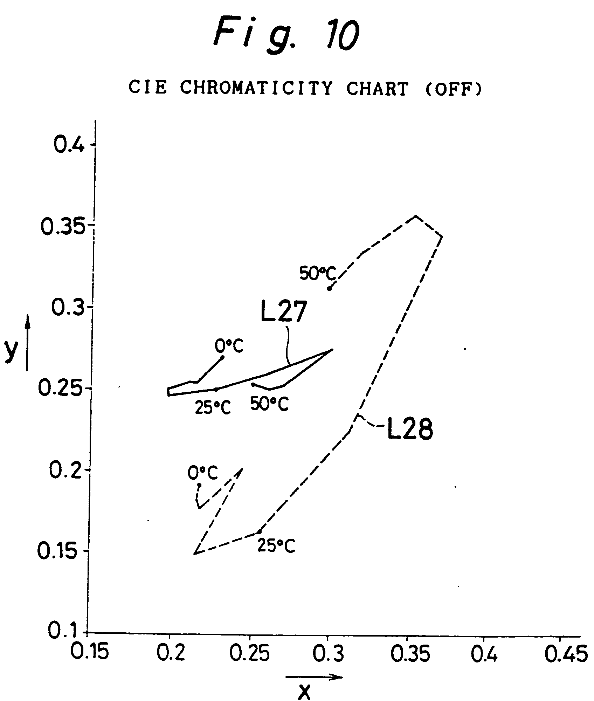

Fig. 10 is a chromaticity diagram showing chromaticity changes against temperature changes (0 to 50°C) when a nonselective waveform is applied. In Fig. 10, solid line L27 denotes the chromaticity changes of the liquid crystal display apparatus 1, and broken line L28 denotes the chromaticity changes in the prior art. As known from Fig. 10, the liquid crystal display apparatus 1 is smaller in chromaticity changes against temperature changes when a nonselective waveform is applied as compared with the prior art.

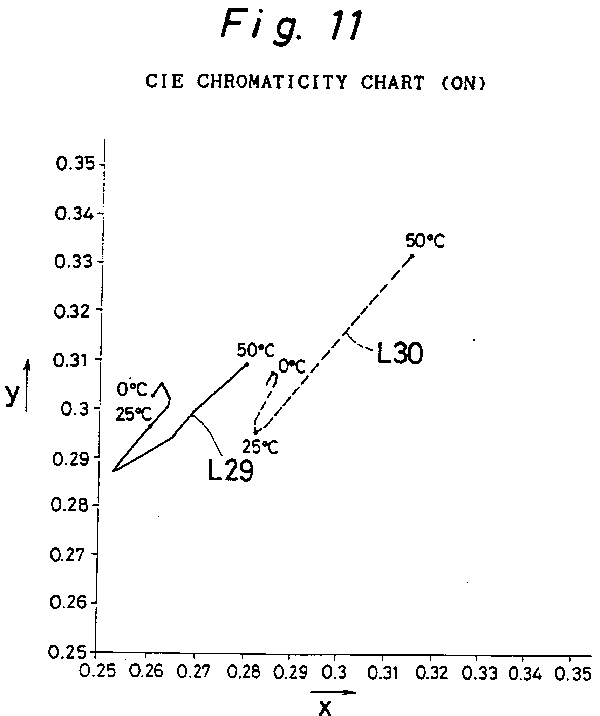

Fig. 11 is a chromaticity diagram showing chromaticity changes against temperature changes (0 to 50°C) when a selective waveform is applied. In Fig. 11, solid line L29 denotes the chromaticity changes of the liquid crystal display apparatus 1, and broken line L30 denotes the chromaticity changes in the prior art. As known from Fig. 11, the liquid crystal display apparatus 1 is smaller in chromaticity changes against temperature changes when selective waveform is applied as compared with the prior art.

Thus, according to the embodiment, in the liquid crystal display apparatus 2 of negative display type provided with phase difference plates, a stable monochromatic display is obtained, with smaller changes of chromaticity against temperature changes as compared with the prior art.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A liquid crystal display apparatus composed by stacking a first polarizer (6), a first phase difference plate (4), a supertwisted nematic liquid crystal element (3), a second phase difference plate (5), and a second polarizer (7) in this sequence, wherein

supposing the product of the liquid crystal layer thickness d of the supertwisted nematic liquid crystal element (3) and the refractive anisotropy Δn of the liquid crystal to be d·Δn, the retardation of the first and second phase difference plates (4,7) to be R, the angle formed by the liquid crystal molecular orientation axis of the first polarizer side substrate (2a) of the liquid crystal element (3) and the absorption axis of the first polarizer (6) to be α, the angle formed by the liquid crystal molecular orientation axis of the first polarizer side substrate (2a) of the liquid crystal element (3) and the optical axis of the first phase difference plate (4) to be β, the angle formed by the liquid crystal molecular orientation axis of the second polarizer side substrate (2b) of the liquid crystal display element (3) and the absorption axis of the second polarizer (7) to be γ, the angle formed by the liquid crystal molecular orientation axis of the second polarizer side substrate (2b) of the liquid crystal element (3) and the optical axis of the second phase difference plate (5) to be θ, and the twisting angle of the liquid crystal molecule of the liquid crystal element

6

(3) to be $\phi$, the following conditions are satisfied:

$$d \cdot \Delta n = 0.82 \text{ to } 0.86 \ \mu m \quad (1)$$
$$R = 360 \text{ to } 400 \text{ nm} \quad (2)$$
$$\alpha = 40° \text{ to } 50° \quad (3)$$
$$\beta = 70° \text{ to } 80° \quad (4)$$
$$\gamma = 40° \text{ to } 50° \quad (5)$$
$$\theta = 100° \text{ to } 110° \quad (6)$$
$$\phi = 210° \text{ to } 260° \quad (7)$$

2. A liquid crystal display apparatus as claimed as claim 1, wherein the conditions are setting in $d \cdot \Delta n = 0.86$ $\mu m$, R = 390 nm, $\alpha = 45°$, $\beta = 75°$, $\gamma = 45°$, $\theta = 105°$, $\phi = 240°$.

3. A liquid crystal display apparatus as claimed as claim 1, wherein the conditions are setting in $d \cdot \Delta n = 0.84$ $\mu m$, R = 380 nm, $\alpha = 45°$, $\beta = 75°$, $\gamma = 45°$, $\theta = 105°$, $\phi = 240°$.

# Fig. 1

# Fig. 2

# Fig. 3

## CIE CHROMATICITY CHART (BACKGROUND)

# Fig. 4

CIE CHROMATICITY CHART (OFF)

# Fig. 5

## CIE CHROMATICITY CHART (ON)

# Fig. 6

## (1) SELECTIVE WAVEFORM

Vop

Vop/13

120 WORDS

240 WORDS

# Fig. 6

## (2) NONSELECTIVE WAVEFORM

0.85×Vop

Vop/13

120 WORDS

240 WORDS

# Fig. 7

MCPD SPECTRUM

WAVELENGTH (nm)

# *Fig. 8*

## CHROMATICITY VS. Vop (DRIVING VOLTAGE)

# *Fig. 9*

## CIE CHROMATICITY CHART (BACKGROUND)

# Fig. 10

## CIE CHROMATICITY CHART (OFF)

# *Fig. 11*

## CIE CHROMATICITY CHART (ON)

**European Patent Office**

# EUROPEAN SEARCH REPORT

Application Number

EP 92 30 8176

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 382 460 (SHARP K.K)<br>* page 7, line 08 - page 8, line 12 * | 1-3 | G02F1/1335 |
| A | EP-A-0 393 191 (SANYO)<br>* page 11, line 06 - page 16, line 23 * | 1-3 | |
| A | DE-A-4 103 720 (HITACHI)<br>* column 8, line 06 - line 25 * | 1-3 | |
| A | 1989 SID INTERNATIONAL SYMPOSIUM BALTIMORE USA<br>pages 390 - 392<br>M.OHGAWARA &AL 'a color stn display with two retardation ..'<br>* the whole document * | 1-3 | |
| | | | **TECHNICAL FIELDS SEARCHED (Int. Cl.5)**<br><br>G02F |

The present search report has been drawn up for all claims

| Place of search | Date of completion of the search | Examiner |
|---|---|---|
| THE HAGUE | 15 DECEMBER 1992 | DIOT P.M. |

EPO FORM 1503 03.82 (P0401)